(19) Europäisches Patentamt
European Patent Office
Office européen des brevets

(11) **EP 1 752 276 B1**

(12) **EUROPEAN PATENT SPECIFICATION**

(45) Date of publication and mention of the grant of the patent:
**07.10.2015 Bulletin 2015/41**

(51) Int Cl.:
***B29C 55/06*** *(2006.01)*

(21) Application number: **05107371.6**

(22) Date of filing: **11.08.2005**

(54) **Process for the manufacture of oriented polymers strips**

Verfahren zur Herstellung von orientierten Polymerstreifen

Procédé pour la fabrication de bandes de polymère orientées

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**14.02.2007 Bulletin 2007/07**

(73) Proprietor: **Egeplast**
**Werner Strumann GmbH & Co. KG**
**48268 Greven (DE)**

(72) Inventors:
• **Matz, Pierre**
**1457 Nil Saint-Vincent (BE)**
• **Beullekens, Frédéric**
**1330 Rixensart (BE)**
• **Dehennau, Claude**
**1410 Waterloo (BE)**

(74) Representative: **Fritz & Brandenburg**
**Patentanwälte**
**Postfach 45 04 20**
**50879 Köln (DE)**

(56) References cited:
**EP-A- 1 095 758      WO-A-02/088589**
**US-A- 3 214 503      US-A- 3 619 460**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for the manufacture of an oriented strip comprising a semi - crystalline polymer according to which a film comprising said polymer is drawn in a longitudinal direction on a length L between 2 points at which the film moves at a respective linear velocity $v_1$ and $v_2$ during its drawing, wherein $v_1$, $v_2$ and L answer the following criteria:

$$(v_2 - v_1)/L > 0.22 \ s^{-1},$$

wherein the drawing is made by means of at least 2 independently driven drawing rolls having their axes of rotation perpendicular to the longitudinal direction of the polymer film and rotating in the same sense but with different tangential velocities $v_1$ and $v_2$.

It is known from prior art that stretching a semi-crystalline polymer film at a temperature slightly below its melting temperature in its longitudinal direction results in a mono-axial orientation of the polymer chains. Such mono-axially oriented polymer films exhibit in the longitudinal direction, certain mechanical properties which are superior over the properties of non-oriented polymer films.

There are a number of solid state orientation processes that have been used to produce highly oriented, high modulus polymers. These processes include drawing, extrusion and rolling. All three techniques rely on realigning the existing crystal structure into a highly oriented fibrillar structure by an extension deformation process. Each of these techniques also has several variations and unique features associates with it. Drawing can be isothermal or non-isothermal, free or constrained deformation. Extrusion can be direct or hydrostatic, adiabatic or isothermal. Rolling can be with or without tension, adiabatic or isothermal.

It is well known that during mono-axial orientation, films tend to neck. Besides, while the orientation of the polymer chains renders a polymer film reinforced in longitudinal direction, its fragility in transverse direction is usually increased. The fragility in transverse direction does not significantly impair the reinforcement effect in longitudinal direction, but causes problems regarding the processability of the polymer film, particularly when it is intended to cut off its edges in order to obtain oriented polymer strips having precise dimensions.

For example, mono-axially oriented polymer films having precise dimensions become particularly relevant when they are used to enhance the mechanical stability of tubes. Reinforcing polymer strips made of mono-axially oriented polymer films may be applied to tubes for enhancing their resistance against hydrostatic pressure. In comparison to conventional tubes not supported by said reinforcing polymer strips, the working pressure may be increased or the thickness of the tube, which is required to withstand the pressure the tube is exposed to, may be decreased. In order to achieve an optimal stabilizing effect the reinforcing polymer strips should be fixed on the cylinder jacket of said tubes in a certain angle (preferably 54.7° relative to the longitudinal axis of the tube). Furthermore, it is required that the reinforcing polymer strips cover the entirety of the tube thereby avoiding gaps between successive windings to achieve a homogenous reinforcement of the tube. However, this may only be realized if the reinforcing polymer strips have a constant and precise width. For further details it can be referred to e.g. FR-A 2 836 652, WO 02/87874 and WO 02/88589. When tubes wrapped by such reinforcing polymer strips are tested for their stability limit (bursting test), the reinforcing polymer strips usually crack causing a deafening noise.

When the edges of conventional mono-axially oriented polymer films are subjected to cutting tools, most of them fail to provide straight cutting edges but rather end up with fringes, fissures and the like. Only cutter systems based on $CO_2$ lasers or water jets may provide cuts of adequate quality. However, these systems are very expensive when compared with conventional cutter systems. Moreover, when cut with a $CO_2$ laser, certain polymers may release toxic fumes which require troublesome purification for economical reasons. When a water jet is used as a cutter system, a further process step is required, as the strips usually need purification after cutting.

Thus, there is a demand for polymer films which have advantages over the prior art and, in particular, the edges of which may be subjected to conventional cutting tools. The polymer films should have comparable, preferably better properties than the polymer films of the prior art, in particular, they should combine a good reinforcing effect in longitudinal direction with a decreased fragility in transverse direction and a good ability of being cut.

US 4,151,245 discloses a method of stretching a thermo-softening high molecular film comprising the steps of moving the thermo-softening high molecular film in a longitudinal direction while maintaining the film at a temperature below its softening temperature, and exerting on the surface of such film a force tending to expand the film while at the same time exerting a compressive force on the film in the direction of its thickness through rubber-like resilient members. By doing so, the film is prevented from necking. However, in this document, it is recommended not to stretch the film more than 1.2 to 1.5 times its original length, so that it is necessary to perform the stretching operation several times in order to stretch the film satisfactorily.

US 3,619,460 discloses a process for the manufacture of an oriented strip comprising a semi - crystalline polymer according to which a film comprising said polymer is drawn in a longitudinal direction on a length L between two points at which the film moves at a respective linear velocity $v_1$ and $v_2$ during its drawing, wherein $v_1$, $v_2$ and L answer the following criteria:

$$(v_2 - v_1)/L > 0.22 \text{ s}^{-1},$$

wherein the drawing is made by means of at least two independently driven drawing rolls having their axes of rotation perpendicular to the longitudinal direction of the polymer film and rotating in the same sense but with different tangential velocities $v_1$ and $v_2$, wherein nip rolls are used to nip the film against the feed roll, so that the drawing is done in the tangential gap between the feed roll and a consecutive draw roll.

It has now been surprisingly found that even better mechanical properties can be achieved if necking takes place and is even passed beyond, but in a specific way: by drawing the polymer film at a very high relative drawing ratio (i.e. at a very high ratio on a very short distance) and preventing the film from slipping of the drawing rolls by means of contra rotating auxiliary rolls, having their axis of rotation perpendicular to the longitudinal direction of the polymer film and polymer film and rotating with the same tangential velocity but in the opposite sense.

In fact, upon drawing a given length of semi-crystalline polymer film at an increasing drawing ratio, said film usually necks till it reaches a minimum width. But if thereafter, the drawing ratio is still increased, the width of the film will increase again (probably due to the fact that the molecular entanglements are then solicited) and reach a "plateau" value, after which the film will brake. Films which were stretched beyond the critical drawing ratio (where maximum necking occurs) show remarkable, unexpected properties.

According to the invention, semi-crystalline polymer films are drawn into strips. The term "film" as used for the present specification refers to a film, sheet, web and the like. The term "semi-crystalline polymer" is meant to designate a polymer which crystallizes to some extent after solidification from the melted state. It is hence a thermoplastic material (since it has to melt) which may be an engineering polymer (like PA (polyamide) or PVDF (polyvinylidene fluoride)) or a polyolefin. It is preferably a polyolefin and most preferably, a polyethylene like HDPE (high density polyethylene). Good results have been obtained with bimodal HDPE resins and more particularly, with such resins having a MI (Melt Index according to ISO 1133 under 5 kg and 190°C) of less than 2 g/10min, preferably less than 1 g/10min.

According to the invention, the film must be drawn at a high speed (using a high drawing ratio) on a short distance. This has been quantified by a relative drawing speed i.e. the difference of the speed of the film between 2 points of it divided by the length between said points: $(v_2 - v_1)/L$. According to the invention, this relative drawing speed must be $\geq 0.22$ expressed in $\text{s}^{-1}$ (or 25/s). More preferably, said relative drawing speed is $\geq 0.25$ and event 0.28 $\text{s}^{-1}$. In some cases, depending on the polymer's nature and the drawing conditions, this relative drawing speed may even be $\geq 0.30$ $\text{s}^{-1}$ and the film still gets improved properties without breaking.

According to one embodiment of the present invention, the stretching of the polymer films is performed by means of succeeding rolls on which the film must adhere, said rolls rotating with different tangential velocities thereby resulting in an orientation of the polymer chains. Such rolls are well known to a person of ordinary skill in the art. They are generally made of a hard metal (like steel) core, and are controlled as far as there temperature, pressure... are concerned. They may have a cylinder jacked around their metal core, which may be of metal as well or of another material (like rubber for instance) and which may be surface treated.

In practice, in order to be able to reach such high relative drawing speeds, the film is preferably prevented from slipping of the rolls by using a contrarotative auxiliary roll at least on the first drawing roll (because it is usually from this one that it tends to slip) and/or by surface treating the drawing rolls so as to improve adhesion of the film thereon. In the first case, the contrarotating auxiliary roll preferably has its axis of rotation perpendicular to the longitudinal direction of the polymer film and rotates with the same tangential velocity v1 as the first roll but in the opposite sense. In any case, good results are obtained when putting said film in contact with a big part of the circumference of each roll (ideally, with the maximum possible i.e. about half of it).

Preferably, the film is also prevented from slipping of the second drawing roll by means of a second contrarotating auxiliary roll.

Hence, according to an advantageous embodiment of the invention, the drawing is made by means of at least 2 independently driven drawing rolls having their axes of rotation perpendicular to the longitudinal direction of the polymer film and rotating in the same sense but with different tangential velocities $v_1$ and $v_2$, and the film is prevented from slipping of these drawing rolls by means of contrarotating auxiliary rolls, having their axis of rotation perpendicular to the longitudinal direction of the polymer film and rotating with the same tangential velocity but in the opposite sense.

An even more preferred embodiment of this process uses at least a third drawing roll which rotates with a tangential velocity $v_3$ which is higher than the one of the second roll ($v_2$). In this embodiment, preferably, the third drawing roll is opposed by a contrarotating auxiliary roll as well.

In the process of the invention, the polymer film is drawn in solid state (i.e. at a temperature below its melting point), but at a temperature close to its melting temperature however, for instance from 10 to 50°C below it and more preferably, from 15 to 40°C below it.

Preferably, drawing takes place in line with the film manufacture by extrusion, calendaring... In that case, the film must be cooled at a temperature lower than its crystallization temperature before stretching. Alternatively, drawing may take place on a film heated at the required temperature. For instance, temperature conditioning cylinders may be used to respectively cool or heat the films at the required temperature.

The key feature of this embodiment, as explained above, lies in the fact of having 2 drawing rolls which draw the film at a high speed on a short distance. This does not imply however that said 2 rolls should be the first of the drawing installation (including a succession of drawing rolls). In fact, according to a preferred embodiment, each drawing roll is doubled and consists in a pair of rolls rotating at the same speed. In other words, the 2 first rolls are rotating at the same speed and the second ones as well (and even the two 3$^{rd}$ rolls, if any) so that the required high drawing ratio is observed between the second roll of the first pair, and the first roll of the second pair. In practice, good results have been obtained with 3 pairs of drawing rolls rotating with increasing tangential velocities v1, v2 and v3 and with the above mentioned criteria being answered by the second roll of the first set and by the first roll of the second set of rolls.

Furthermore, preferably, the distance between succeeding rolls rotating with different tangential velocities (i.e. the free length of the polymer film which is subjected to stretching) is reduced thereby suppressing the shrinking of the width of the film between said rolls. Therefore, most preferably, the drawing cylinders mentioned above are put in line, so that the film describes a "S" curve between them. It is then advantageous to position the contrarotating auxiliary rolls on alternate sides of the drawing rolls, i.e. in front of the part of the cylinder encompassing the "S".

The contrarotating auxiliary roll(s) used in this embodiment of the invention most preferably bear a rubber like cylindrical jacket. This, especially when combined with the use of drawing rolls which are surface treated, gives quite good adherence to said rolls.

In the process of this embodiment, the pressure exerted by the contrarotating auxiliary rolls on the film is low so that it does not lead to deformation (flattening) of said film. The film is merely gripped between the drawing and the auxiliary cylinder(s), not compressed between them since that would not allow soliciting the molecular entanglements as is believed to happen. Said gripping may be performed by applying compressed air on said cylinders. Examples of pressure values acting on said rolls are from a few bars (like 6 for instance, which is currently available with compressed air systems)

The present invention also relates to the use of an oriented polymer strip obtained by said process for reinforcing a tube.

The oriented polymer strips according to the present invention, although produced at a high rate (velocity) and in few drawing steps, exhibit comparable mechanical properties in longitudinal direction as the mono-axially oriented polymer films of the prior art but show superior resistance in the direction perpendicular to the orientation of the polymer chains, i.e. in transverse direction. The edges of the mono-axially oriented polymer films may be cut by conventional cutting tools. Costly and highly sophisticated cutting systems such as $CO_2$ lasers and water jets are not required to provide oriented polymer strips of well defined and precise dimensions. Thus, the process provides oriented polymer strips which are optimized for reinforcing tubes. Furthermore, when tubes wrapped by such reinforcing polymer strips are subjected to physical tests, noisy crashes upon bursting do not appear.

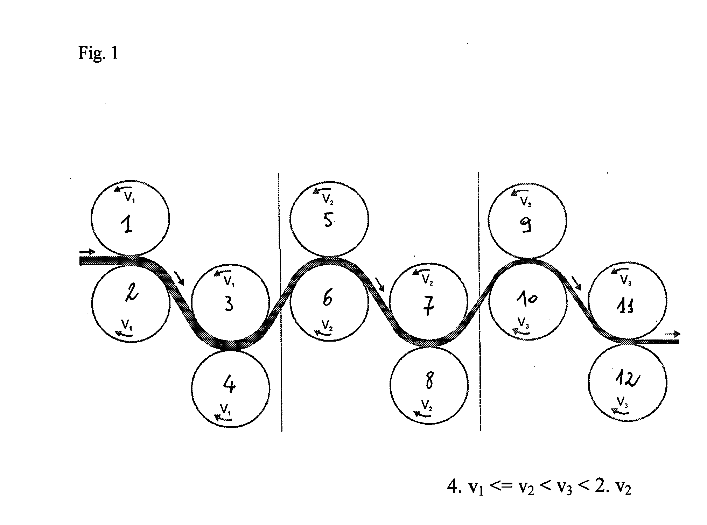

The present invention is illustrated in a non limitative way by figure 1 and the following examples, which use a drawing installation including drawing rolls as set forth in figure 1.

These rolls consist of 3 pairs of drawing rolls all in line, opposed by 3 pairs of contrarotating auxiliary rolls positioned on alternate sides of said line, in order to press the film on the surface of the drawing rolls. In each pair of cylinders, both rolls are rotating at the same tangential speed, respectively $v_1$, $v_2$ and $v_3$, with $v_2$ being at least 4 times $v_1$ and v3 being higher than $v_2$, but less than twice $V_2$.

The drawing installation used in the examples includes such a set of rolls and more specifically, comprises: an extruder (Kuhne with a 60 mm screw and equipped with a flat Johnson die of 300x8mm) for making polymer films of about 260 mm wide; 2 sets of cylinders for cooling the polymer at 50°C and crystallizing it (the last set being only required for high thicknesses); two cylinders ensuring a fixed point at which the speed is controlled; 6 cylinders for the temperature conditioning of the film prior to its orientation (the temperature of the strip being at about 90°C at its entrance in these cylinders and at about 115°C at its exist thereof); the orientation section (made of 3 pairs of cylinders as in figure 1, having a diameter D=130 mm and being spaced from each other by about d=30 mm); a last cutting section where the edges of the film are cut off to the desired width (depending on the diameter of the tube which it is intended for).

Example (according to the invention)

The above described installation was used for making HDPE (Eltex TUB121 from BPS) strips using the following drawing speeds: $v_1$ = about 1 m/min; $v_2$ = about 6.5 m/min and $v_3$ = about 9 m/min; the first draw ratio was hence of about 550% and the second one, of about 30% so that the film was stretched to about 8.5 times in total. Considering the above mentioned size and position of the cylinders, this leads to the following relations:

- $v_2 - v_1$ = 5.5 m/min = 91.7 mm.s$^{-1}$
- $L \cong \pi.D + d$ = 234 mm
- $(v_2-v_1)/L$ = 0.39

The pressure applied by the rubber cylinders was of about 6 bars (that of the compressed air applied on it) so that the strips were not really compressed (flattened down) but merely prevented from slipping. The film width was about 230 mm and it could be cut easily to the ideal width of 200 mm, without breaking it, and be wound around the pipe of 117 mm diameter with the above mentioned ideal angle of 54.7°.

Comparative example (not according to the invention)

All conditions were the same than in the example, except that the contrarotating cylinders were not used; hence, a much lower drawing ratio was obtained (about 6 times only) and a necking of from 260 to 140 mm was observed. It was observed that in practice, the drawing length was in fact double, because the film only reached the speed v2 at the second cylinder of the second set, and not at the first one. Hence, the following relations were observed:

- $v_2 - v_1 = 5.5 m/min = 91.7 mm.s^{-1}$
- $L \cong 2. (\pi.D + d) = 468 mm$
- $(v_2 - v_1)/L = 0.20$

The film obtained was brittle, inhomogeneous as far as it thickness is concerned and the ideal width (200 mm) for getting the ideal winding angle (54.7°) could not be reached.

**Claims**

1.  A process for the manufacture of an oriented strip comprising a semi - crystalline polymer according to which a film comprising said polymer is drawn in a longitudinal direction on a length L between 2 points at which the film moves at a respective linear velocity $v_1$ and $v_2$ during its drawing, wherein $v_1$, $v_2$ and L answer the following criteria:

$$(v_2 - v_1)/L > 0.22 \text{ s}^{-1},$$

wherein the drawing is made by means of at least 2 independently driven drawing rolls (1, 5) having their axes of rotation perpendicular to the longitudinal direction of the polymer film and rotating in the same sense but with different tangential velocities $v_1$ and $v_2$, wherein the film is prevented from slipping of the drawing rolls (1, 5) by means of contra rotating auxiliary rolls (2, 6), having their axis of rotation perpendicular to the longitudinal direction of the polymer film and rotating with the same tangential velocity but in the opposite sense, **characterized in that** each drawing roll (1, 5, 9) is doubled and consists in a pair of drawing rolls (1, 3; 5, 7; 9, 11) rotating at the same speed and the drawing installation includes three pairs of drawing rolls (1, 3; 5, 7; 9, 11), rotating with increasing tangential velocities $v_1$, $v_2$ and $v_3$, opposed by three pairs of contrarotating auxiliary rolls (2, 4; 6, 8; 10, 12).

2.  The process according to claim 1, **characterized in that** the first two drawing rolls (1, 3) are rotating at the same speed $v_1$, the second two drawing rolls (5, 7) are rotating at the same speed $v_2$ and the two $3^{rd}$ drawing rolls (9, 11) are rotating at the same speed $v_3$.

3.  The process according to claim 2, **characterized in that** $v_2$ is at least 4 times $v_1$ and $v_3$ being higher than $v_2$, but less than twice $v_2$, and the high drawing ratio being observed between the second roll (3) of the first pair of drawing rolls and the first roll (5) of the second pair of drawing rolls.

4.  The process according to claim 1, **characterized in that** the semi-crystalline polymer is a polyolefin and said polyolefin is a bi-modal HDPE (high density polyethylene) resin having a MI (Melt Index according to ISO 1133 under 5kg and 190°C) of less than 2g/10min.

5.  The process according to claim 1, **characterized in that** the drawing rolls are surface treated to enhance adhesion of the polymer film thereon.

6.  The process according to one of the preceding claims, **characterized in that** the three pairs of drawing rolls (1, 3; 5, 7; 9, 11) are put in line, so that the film describes a "S" curve between them and that the contrarotating auxiliary rolls (2, 4, 6, 8, 10, 12) are positioned on alternate sides of the drawing rolls, in front of the part of the cylinder encompassing the "S".

7.  The process according to one of the preceding claims, **characterized in that** $v_3$ being higher than $v_2$, but less than twice $v_2$.

8.  The process according to any of the preceding claims, **characterized in that** the contrarotating auxiliary rolls (2, 4, 6, 8, 10, 12) bear a rubber like cylindrical jacket.

9.  A process for reinforcing a tube, **characterized in that** an oriented polymer strip obtained from the process according to any of the preceding claims is used for reinforcing said tube.

**Patentansprüche**

1.  Verfahren zur Herstellung eines orientierten Streifens, umfassend ein teilkristallines Polymer, wodurch ein Film, der das Polymer umfasst, auf einer Länge L zwischen 2 Punkten, an denen sich der Film, während er gezogen wird, mit einer jeweiligen Lineargeschwindigkeit von $v_1$ und $v_2$ bewegt, in einer Längsrichtung ausgezogen wird, wobei $v_1$, $v_2$ und L die folgenden Kriterien erfüllen:

$$(v_2 - v_1)/L > 0{,}22 \ s^{-1},$$

wobei das Ausziehen mittels mindestens 2 unabhängig angetriebener Ausziehwalzen (1, 5) durchgeführt wird, deren Drehachsen im rechten Winkel zur Längsrichtung des Polymerfilms sind und die sich gleichsinnig, jedoch mit unterschiedlichen Tangentialgeschwindigkeiten $v_1$ und $v_2$ drehen, wobei der Film mittels gegenläufiger Hilfswalzen (2, 6), deren Drehachse im rechten Winkel zu der Längsrichtung des Polymerfilms ist und die sich mit der gleichen Tangentialgeschwindigkeit, jedoch im entgegengesetzten Sinn drehen, vor dem Rutschen der Ausziehwalzen (1, 5) bewahrt wird;
**dadurch gekennzeichnet, dass** jede Ausziehwalze (1, 5, 9) verdoppelt ist und in einem Paar von Ausziehwalzen (1, 3; 5, 7; 9, 11) besteht, die sich mit der gleichen Geschwindigkeit drehen, und dass die Ausziehausrüstung drei Paare von Ausziehwalzen (1, 3; 5, 7; 9, 11) beinhaltet, die sich mit zunehmenden Tangentialgeschwindigkeiten $v_1$, $v_2$ und $v_3$ drehen, denen drei Paare von gegenläufigen Hilfswalzen (2, 4; 6, 8; 10, 12) entgegengesetzt sind.

2. Verfahren nach Anspruch 1, **dadurch gekennzeichnet, dass** sich die ersten zwei Ausziehwalzen (1, 3) mit der gleichen Geschwindigkeit $v_1$ drehen, dass sich die zweiten zwei Ausziehwalzen (5, 7) mit der gleichen Geschwindigkeit $v_2$ drehen und dass sich die zwei dritten Ausziehwalzen (9, 11) mit der gleichen Geschwindigkeit $v_3$ drehen.

3. Verfahren nach Anspruch 2, **dadurch gekennzeichnet, dass** $v_2$ mindestens 4-mal $v_1$ ist und $v_3$ größer als $v_2$, jedoch kleiner als zweimal $v_2$ ist und dass das hohe Ziehverhältnis zwischen der zweiten Walze (3) des ersten Paares von Ausziehwalzen und der ersten Walze (5) des zweiten Paares von Ausziehwalzen festgestellt wird.

4. Verfahren nach Anspruch 1, **dadurch gekennzeichnet, dass** das teilkristalline Polymer ein Polyolefin ist und dass das Polyolefin ein bimodales Harz von HDPE (Polyethylen hoher Dichte) mit einem SI (Schmelzindex gemäß ISO 1133 unter 5 kg und bei 190 °C) von kleiner als 2 g/10 min ist.

5. Verfahren nach Anspruch 1, **dadurch gekennzeichnet, dass** die Ausziehwalzen oberflächenbehandelt sind, um die Haftung des Polymerfilms darauf zu erhöhen.

6. Verfahren nach einem der vorhergehenden Ansprüche, **dadurch gekennzeichnet, dass** die drei Paare von Ausziehwalzen (1, 3; 5, 7; 9, 11) in einer Reihe angebracht sind, sodass der Film eine "S"-Kurve zwischen ihnen beschreibt, und dass die gegenläufigen Hilfswalzen (2, 4, 6, 8, 10, 12) auf alternierenden Seiten der Ausziehwalzen platziert sind, vor dem Teil des Zylinders, der das "S" umgibt.

7. Verfahren nach einem der vorhergehenden Ansprüche, **dadurch gekennzeichnet, dass** $v_3$ größer als $v_2$, jedoch kleiner als zweimal $v_2$ ist.

8. Verfahren nach einem der vorhergehenden Ansprüche, **dadurch gekennzeichnet, dass** die gegenläufigen Hilfswalzen (2, 4, 6, 8, 10, 12) eine gummiartige zylindrische Ummantelung tragen.

9. Verfahren zum Verstärken eines Rohrs, **dadurch gekennzeichnet, dass** ein orientierter Polymerstreifen, der durch das Verfahren nach einem der vorhergehenden Ansprüche erhalten wird, zum Verstärken des Rohrs benutzt wird.

**Revendications**

1. Procédé de fabrication d'une bande orientée comprenant un polymère semi-cristallin, selon lequel un film comprenant ledit polymère est étiré dans un sens longitudinal sur une longueur L entre 2 points au niveau desquels le film se déplace à une vitesse linéaire respective $v_1$ et $v_2$ pendant son étirement, $v_1$, $v_2$ et L répondant au critère suivant :

$$(v_2 - v_1)/L > 0{,}22 \ s^{-1}$$

dans lequel l'étirement est réalisé au moyen d'au moins 2 rouleaux d'étirement (1, 5) entraînés de manière indépendamment ayant leurs axes de rotation perpendiculaires au sens longitudinal du film polymère et tournant dans le même sens mais avec des vitesses tangentielles différentes $v_1$ et $v_2$, le film ne pouvant pas glisser des rouleaux d'étirement (1, 5) grâce à des rouleaux auxiliaires tournant en sens inverse (2, 6) ayant leurs axes de rotation perpendiculaires au sens longitudinal du film polymère et tournant avec la même vitesse tangentielle mais dans un sens opposé,
**caractérisé en ce que** chaque rouleau d'étirement (1, 5, 9) est doublé et se compose d'une paire de rouleaux d'étirement (1, 3 ; 5, 7 ; 9, 11) tournant à la même vitesse et l'installation d'étirement comprend trois paires de rouleaux d'étirement (1, 3 ; 5, 7 ; 9, 11) tournant avec des vitesses tangentielles $v_1$, $v_2$

et $v_3$ croissantes auxquelles s'opposent trois paires de rouleaux auxiliaires tournant en sens inverse (2, 4 ; 6, 8 ; 10, 12).

2. Procédé selon la revendication 1, **caractérisé en ce que** les deux premiers rouleaux d'étirement (1, 3) tournent à la même vitesse $v_1$, les deuxièmes deux rouleaux d'étirement (5, 7) tournent à la même vitesse $v_2$ et les troisièmes deux rouleaux d'étirement (9, 11) tournent à la même vitesse $v_3$.

3. Procédé selon la revendication 2, **caractérisé en ce que** la vitesse $v_2$ est au moins 4 fois $v_1$ et ayant leurs axes de rotation perpendiculaires au sens longitudinal du film polymère et tournant $v_3$ est supérieure à $v_2$, mais inférieure à deux fois $v_2$, et le rapport d'étirement élevé étant observé entre le second rouleau (3) de la première paire de rouleaux d'étirement et le premier rouleau (5) de la seconde paire de rouleaux d'étirement.

4. Procédé selon la revendication 1, **caractérisé en ce que** le polymère semi-cristallin est une polyoléfine et ladite polyoléfine est une résine HDPE (polyéthylène haute densité) bimodale ayant un indice de fusion (MI selon la norme ISO 1133 sous 5 kg et 190 °C) inférieur à 2 g/10 min.

5. Procédé selon la revendication 1, **caractérisé en ce que** le les rouleaux d'étirement sont traités en surface pour améliorer l'adhérence du film polymère sur ceux-ci.

6. Procédé selon l'une quelconque des revendications précédentes, **caractérisé en ce que** les trois paires de rouleaux d'étirement (1, 3 ; 5, 7 ; 9, 11) sont placés en ligne, de sorte que le film décrive une courbe « S » entre ceux-ci et que les rouleaux auxiliaires tournant en sens inverse (2, 4, 6, 8, 10, 12) soient positionnés sur des côtés alternés des rouleaux d'étirement, devant la partie du cylindre englobant le « S ».

7. Procédé selon l'une quelconque des revendications précédentes, **caractérisé en ce que** ayant leurs axes de rotation perpendiculaires au sens longitudinal du film polymère et tournant $v_3$ est supérieure à $v_2$, mais moins de deux fois $v_2$.

8. Procédé selon l'une quelconque des revendications précédentes, **caractérisé en ce que** les rouleaux auxiliaires tournant en sens inverse (2, 4, 6, 8, 10, 12) comprennent une enveloppe cylindrique de type caoutchouc.

9. Procédé de renforcement d'un tube, **caractérisé en ce qu'**une bande de polymère orientée obtenue par le procédé selon l'une quelconque des revendications précédentes est utilisée pour renforcer ledit tube.

Fig. 1

$$4.\ v_1 \le v_2 < v_3 < 2 \cdot v_2$$

8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2836652 A
- WO 0287874 A
- WO 0288589 A
- US 4151245 A
- US 3619460 A